Europäisches Patentamt

European Patent Office

Office européen des brevets

(11) Publication number: **0 325 067 B1**

(19)

(12) **EUROPEAN PATENT SPECIFICATION**

(45) Date of publication of patent specification: **11.11.92** (51) Int. Cl.⁵: **A23G  3/30**

(21) Application number: **88403212.9**

(22) Date of filing: **16.12.88**

(54) **New sugar-containing chewing gum compositions.**

(30) Priority: **22.12.87 FR 8717893**

(43) Date of publication of application:
**26.07.89 Bulletin  89/30**

(45) Publication of the grant of the patent:
**11.11.92 Bulletin  92/46**

(84) Designated Contracting States:
**BE CH DE GB IT LI NL**

(56) References cited:
**EP-A- 0 086 769      EP-A- 0 102 081**
**GB-A- 2 066 044      US-A- 4 166 134**
**US-A- 4 271 199      US-A- 4 352 823**

(73) Proprietor: **GENERAL FOODS FRANCE**
**6, Rue Lionel Terray**
**F-92500 Rueil Malmaison(FR)**

(72) Inventor: **Berger, Evelyne**
**22, Avenue du Petit Parc**
**F-94300 Vincennes(FR)**

(74) Representative: **Jolly, Jean-Pierre et al**
**Cabinet Jolly 54, rue de Clichy**
**F-75009 Paris(FR)**

EP 0 325 067 B1

**Description**

The invention relates to new paste compositions for chewing usually called "chewing gum". It relates more particularly to sugar-containing chewing gum compositions adapted to be packed in cardboard packages.

Chewing gum of a conventional type comprises a minor proportion of an insoluble basic gum and additives and a major proportion of substances conferring a sweet taste on the product, the whole being flavoured. Other less usual chewing gums (those without sugar) may comprise a higher proportion of basic gum. The different ingredients are mixed hot in two successive phases, first of all the ingredients of the basic gum then the confectionery ingredients. Thus, a chewing gum paste is obtained which may be packed in the form of sticks, lozenges, sugar-coated dragées etc...

In the present state of the art, chewing gum sticks are generally wrapped in an aluminium film which has a purely sanitary purpose, and the sticks thus wrapped are packed in sealed multi-layer composite material wrappers, which are manufactured at a very high rate and must have excellent permeability characteristics. The preservation of chewing gum for long periods, exceeding a year, under eminently variable hygrometric storage conditions, in fact requires that the transfer of water be avoided which may cause either drying up of the product, producing brittle sticks, or a rehumidification of the chewing gum, leading to sticky sticks. In both cases, the packed confectionery would not have a very attractive appearance and would have different organoleptic qualities than those expected by the consumer.

US-A-4 271 199 describes a chewing gum containing sugar, consisting in a basic gum and a recristallized and premixed combination of solid and liquid sweeteners. Such chewing gum belongs to the type "bubble-gum" and it does not stick to its packaging.

EP-A-0 102 081 too concerns a bubble gum containing basically butadiene and a mineral filler, with good filmogene properties and a reduced tendancy to shrinkage.

UK-A-2 066 044 describes a chewing gum with a rather hard initial texture enabling to pack such chewing gum easily. Il contains one or several liquid moisturizers that confer to such gum a soft consistance when chewed.

At last, US-A-4 352 823 concerns an extruded chewing gum containing a central part which is gum-based and protected by an external part -shell-shaped- avoiding the gum to stick.

The invention proposes replacing the composite multi-layer materials used for packing sticks of chewing gum containing sugar by a normal packing material, less expensive and easier to use, namely card paper or cardboard having no particular sealing characteristics.

Another object of the invention is to make it possible to pack these chewing gum sticks in cardboard or card paper packings of a type different from the usual wrappers, for example in boxes similar to those used for packing cigarettes or pastilles.

Finally, an object of the invention is to propose new sugar-containing chewing gum formulae adapted for packing, in the form of sticks, in a cardboard or paper card packing, and lending themselves to preservation in such unsealed materials as good as that in traditional products.

For this, the invention provides a sugar-containing chewing gum composition adapted to be packed in the form of sticks, without any particular precaution, in a cardboard or card paper packing, to the exclusion of any damp-proof material, characterized in that it has a relative humidity between 43 and 45% and comprises, in % by weight, between 22 and 24% of basic gum, between 11 and 14% of glucose syrup and between 1.2 and 1.8 % by weight of plasticizer substances, glycerine + lecithin.

The invention also has as object the use of a cardboard or card paper packing, to the exclusion of any damp-proof material, for packing a batch of chewing gum sticks.

For example, between 0.8% and 1.2% by weight of glycerine, between 0.4% and 0.6% by weight of lecithin may be used. In addition, between 1.2% and 1.8% by weight of glycerine and between 1.2 and 1.8% by weight of liquid sorbitol may advantageously be used.

The Applicant has in fact discovered that good preservation of the chewing gum sticks and a substantial absence of exchange of humidity with the ambient atmosphere may be obtained by modifying the traditional formulae. : a reduction of the glucose syrup content, an increase of the basic gum and plasticizer proportions and the use of a water content stabilizer such as sorbitol. Such modifications to the traditional formulae confer on the product a reduced H.R.E. with respect to that of the usual compositions and consequently makes it possible to reduce the water exchanges. It is thus possible to pack the chewing gum in the form of sticks without inconvenience in cardboard packing packages, whereas the traditional products, under such conditions, would become either sticky or hard and brittle, and must then be packed in sophisticated multi-layer wrappers expensive to produce.

Since air is considered dry from a relative humidity of 45%, the Applicant has discovered that, to

2

ensure good stability in time of the chewing gum sticks packed without special sealing precautions, it is necessary to lower their relative H.R.E. balance humidity to between about 43 and about 45%.

The constituent proportions of the chewing gum of the invention have been determined so as to reach this result.

In fact, lowering the water content of the product leads to a glucose syrup content of 11 to 14% by weight.

In this range, it has been discovered that the mechanical properties of the paste do not allow the finished product to be packed under good conditions and it is necessary to choose a basic gum content higher by about a quarter than the traditional content so as to obtain good mechanical properties. Tests carried out by the Applicant have led to choosing a gum concentration between 22 and 24%.

However, the fact of increasing the basic gum content of the chewing gum results in unfavourable organoleptic properties and, in particular, in an increased hardness of the chewing gum when it is chewed. This unfavourable texture of the chewing gum must be corrected by incorporating sufficient amounts of ingredients having emulsifying or stabilizing properties, in particular between 0.8% and 1.2% by weight of glycerine associated with between 0.4% and 0.6 of lecithin; or between 1.2 and 1.8% by weight of glycerine and between 1.2 and 1.8% by weight of liquid sorbitol.

These increased plasticizer proportions result however in adversely affecting the manufacturing conditions because of the sticking which results therefrom. It is therefore preferable to add a powdery substance to the paste, e.g. saccharose or, preferably, anhydrous sorbitol, which reveals itself to be more efficient in a proportion of about 2 to 5% by weight, this ingredient acting as a water retainer.

The following comparative example shows the excellent preservation of chewing gum sticks in accordance with the invention compared with a known type of chewing gum, packed both in cardboard with no damp-proofing and in traditional multi-layer sealed wrappers.

COMPARATIVE EXAMPLE

Sticks of a chewing gum according to the invention and sticks of a known type of chewing gum, pre-packed in cardboard boxes or traditional sealed multi-layer cases were tested for keeping under extreme temperature and humidity conditions.

The compositions of the chewing gum sticks tested are given in the following table, where the results obtained have also been shown. The chewing gum sticks were pre-wrapped in an aluminium complex comprising, on the outside, an embossed aluminium foil ($7\mu m$, $19g/m^2$), on the inside a sheet of bleached sulphated paper ($25 g/m^2$) and between the two a polyvinyl acetate based adhesive layer. The sticks thus wrapped were packed in a sulphate bleached cardboard box, 280 microns in thickness and having a specific weight of $220 g/m^2$, whose external faces were formed of bleached cellulose.

For purely aesthetic purposes, the box was itself wrapped in a twice drawn thermo-fixed polypropylene film ($26 \mu m$, $25 g/m^2$) comprising an acrylic coating ($1 \mu m$) on its external face, and a polyvinyl chloride internal coating ($2 \mu m$).

The sticks were tested under drying conditions ($30°C$ and 30% relative humidity) and under humidified conditions ($30°C$ and 80% relative humidity). The results obtained are given in the table below.

In the test under drying conditions, the capacity of the chewing gum was tested to remain flexible under such conditions. The force measured required for curving the sample is inversely proportional to the elastic deformation of the product. It can be seen that, with the formulation of the invention, the product still bends readily, even after 30 days storage under such conditions, whatever the packing. On the other hand, with the traditional formulation, the product offers a certain resistance when it is packed in conventional cases and breaks on bending when it is packed in cardboard boxes.

In the test under humidifying conditions, the test consists in evaluating the extent to which the paste sticks to the aluminium foil, using the following classification :

1. No sticking

2. Slight sticking : at the ends or on the surface (one attachment point)

3. Medium sticking : two adherence points (lower or upper face)

4) High sticking : several sticky zones

5) Very high sticking : impossible to remove the aluminium foils.

After 30 days accelerated preservation in a humid atmosphere, the paste of the invention, associated with a conventional sealed multi-layer complex packing, adheres slightly to the aluminium. On the other hand, the packing in cardboard boxes is accompanied by practically negligible sticking. It will be noted that, whatever the packing, the percentage of gluey sticks and the amount of sticking are higher for the known formulation than for the formulation of the invention.

## TABLE

| Ingredients | Known formulation (% by weight) | Composition of the invention (% by weight) Range of use | recommend. amount |
|---|---|---|---|
| Saccharose | 61 | 55-60 | 58 |
| Glucose syrup | 16 | 11-14 | 13 |
| Ingredients of the gum | 20 | 22-24 | 22 |
| . antioxidant | 0.016 | 0.018-0.019 | 0.01 |
| . fillers | 4.9 | 5.4-5.9 | 5.4 |
| . waxes | 2.8 | 3.1-3.3 | 3.1 |
| . plasticizers | 3.5 | 3.9-4.2 | 3.9 |
| . polymers | 4.3 | 4.8-5.2 | 4.8 |
| . resins | 4.4 | 4.9-5.3 | 4.9 |
| Plasticizer: glycerine | 0.5 | 0.8-1.2 | 1 |
| Emulsifier : lecithin | 0.2 | 0.4-0.6 | 0.5 |
| Liquid aromas | 0.9 | 1 - 1.1 | 1 |
| Sorbitol | 0 | 2 - 5 | 3 |
| H.R.E. (%) | 50 | 43 - 45 | 44 |

| | Known formulation | Composition of the invention |
|---|---|---|
| **I. Flexibility of the sticks (force expressed in N)** | | |
| 1. At time $T_o$ | 0.7 | 0.3 |
| 2. After 30 days storage under the following conditions : 30°C – 30% HR | | |
| A) In conventional sealed cases | 1.4 | 0.3 |
| B) In cardboard boxes | 3 | 0.5 |
| **II Proportion of sticks sticking after 30 days storage under the conditions 30°C, 80% HR (in %)** | | |
| A) In conventional sealed cases | Slight stick.60 Avge stick. 22 High stick. 7 | Slight stick.36 Avge. stick. 4 High stick. 0 |
| B) In cardboard boxes | Slight stick.38 Avge stick. 22 High stick. 9 | Slight stick. 3 Avge. stick. 0 High stick. 0 |

These very advantageous results illustrate the possibility of packing the chewing gum sticks of the invention in non sealed cardboard packings with shelf life equivalent to and even better than that obtained with conventional sealed packings made from a multi-layer complex, which are much more costly to produce than simple cardboard boxes.

Apart from the above mentioned sulphate bleached cardboard, cardboard may also be used in relatively thick sheets (280 $\mu$m, 22 g/m$^2$) whose inner face is formed by a polyethylene film with a specific weight of 15 g/m². This type of cardboard has a beneficial influence on the flavour qualities of the chewing gum.

Ordinary cardboard may also be used having no particular sealing quality and comprising no coating layer.

The cardboard packing may be of any type and, particularly, of the cigarette packet type.

The invention provides then a new method of packing chewing gum sticks which is distinguished from usual packings by its simplicity and its ease of use. The invention also provides new chewing gum stick formulations which make it possible to preserve them in these new packings under conditions at least as good as those of the prior art.

**Claims**

1. Sugar-containing chewing gum composition adapted to be packed in the form of sticks, without particular precautions, in a cardboard or card paper packing, to the exclusion of any damp-proof material, characterized in that it has a relative humidity between 43 and 45% and comprises, in % by weight, between 22 and 24% of basic gum, between 11 and 14% of glucose syrup and between 1.2 and 1.8% by weight of plasticizer substances : glycerine + lecithin.

2. Chewing gum composition according to claim 1, characterized in that it contains about 22% by weight of basic gum.

3. Chewing gum composition according to one of claims 1 and 2, characterized in that the basic gum comprises, in % by weight of the chewing gum composition, 0.018 to 0.019% of an antioxidant, 5.4 to 5.9% of fillers, 3.1 to 3.3% of waxes, 3.9 to 4.2% of plasticizers, 4.8 to 5.2% of polymers and 4.9 to 5.3% of resins.

4. Chewing gum composition according to claim 3, characterized in that the basic gum comprises, in % by weight of the chewing gum composition, 0.016% of an antioxidant, 4.9% of fillers, 2.8% of waxes, 3.5% of plasticizers, 4.3% of polymers and 4.4% of resins.

5. Chewing gum composition according to one of claims 1 to 4, characterized in that it contains about 13% by weight of glucose syrup.

6. Composition according to any one of claims 1 to 5, characterized in that it comprises between 55 and 60% by weight and, preferably, 58% by weight of saccharose.

7. Chewing gum composition according to one of claims 1 to 6, characterized in that it comprises between 0.8% and 1.2% by weight of glycerine and between 0.4 and 0.6% by weight of lecithin.

8. Chewing gum composition according to one of claims 1 to 7, characterized in that it comprises between 1.2% and 1.81% by weight of glycerine and between 1.2% and 1.8% by weight of liquid sorbitol.

9. Chewing gum composition according to one of claims 2 to 8, characterized in that it comprises a powdery stabilizer such as anhydrous sorbitol.

10. Chewing gum composition according to claim 8, characterized in that it contains between 2 and 5% by weight and, preferably, 3% by weight of anhydrous sorbitol.

11. Chewing gum composition according to claim 1, having a relative balance humidity of 44%, characterized in that it comprises, in % by weight, 55% of saccharose, 13% of glucose syrup, 22% of basic gum, 1% of glycerine, 0.5% of lecithin, 1% of liquid flavouring and 3% of sorbitol.

12. Chewing gum composition according to claim 11, characterized in that the basic gum comprises, in % by weight of the chewing gum composition, 0.016% of an antioxidant, 4.9% of fillers, 2.8% of waxes, 3.4% of plasticizers, 4.3% of polymers and 4.4% of resins.

13. Use of cardboard or card paper packings, to the exclusion of any damp-proof material, for packing a batch of chewing gum sticks whose composition is in accordance with one of claims 1 to 12, pre-wrapped in a non impermeable aluminium foil.

**Patentansprüche**

1.  Zuckerenthaltende Kaugummizusammensetzung, die geeignet ist, um ohne besondere Vorkehrungen in Form von Streifen in einen Karton oder eine Papierkartenverpackung, unter Ausschluß von jeglichem feuchtigkeitsbeständigem Material, verpackt zu werden,
    dadurch gekennzeichnet,
    daß sie eine relative Feuchtigkeit zwischen 43 und 45% aufweist und, in Gew.%, zwischen 21 und 24% an Grundgummimasse, zwischen 11 und 14% an Glykosesirup und zwischen 1,2 und 1,8% an formbar machenden Substanzen: Glyzerin und Lecithin, enthält.

2.  Kaugummizusammensetzung nach Anspruch 1,
    dadurch gekennzeichnet,
    daß sie ungefähr 22 Gew.% Grundgummimasse enthält.

3.  Kaugummizusammensetzung nach einem der Ansprüche 1 und 2,
    dadurch gekennzeichnet,
    daß die Grundgummimasse, in Gew.% der Kaugummizusammensetzung, 0,018 bis 0,019% eines Alterungsschutzmittels, 5,4 bis 5,9% an Füllmasse, 3,1 bis 3,3% an Wachsen, 3,9 bis 4,2% an Pastifiziermittel, 4,8 bis 5,2% an Polymeren und 4,9 bis 5,3% an Harzen enthält.

4.  Kaugummizusammensetzung nach Anspruch 3,
    dadurch gekennzeichnet,
    daß die Grundgummimasse, in Gew.% der Kaugummizusammensetzung, 0,016% eines Alterungsschutzmittels, 4,9% an Füllmasse, 2,8% an Wachsen, 3,5% an Plastifiziermittel, 4,3% an Polymeren und 4,4% an Harzen enthält.

5.  Kaugummizusammensetzung nach einem der Ansprüche 1-4,
    dadurch gekennzeichnet,
    daß sie ungefähr 13 Gew.% an Glykosesirup enthält.

6.  Zusammensetzung nach einem der Ansprüche 1-5,
    dadurch gekennzeichnet,
    daß sie zwischen 55 und 60 Gew.%, vorzugsweise 58 Gew.% an Rohrzucker enthält.

7.  Kaugummizusammensetzung nach einem der Ansprüche 1-6,
    dadurch gekennzeichnet,
    daß sie zwischen 0,8 und 1,2 Gew.% an Glyzerin und zwischen 0,4 und 0,6 Gew.% an Lecithin enthält.

8.  Kaugummizusammensetzung nach einem der Ansprüche 1-7,
    dadurch gekennzeichnet,
    daß sie zwischen 1,2 und 1,8 Gew.% an Glyzerin und zwischen 1,2 und 1,8 Gew.% an flüssigem Sorbit enthält.

9.  Kaugummizusammensetzung nach einem der Ansprüche 2-8,
    dadurch gekennzeichnet,
    daß sie einen pulverförmigen Stabilisator wie beispielsweise wasserfreies Sorbit enthält.

10. Kaugummizusammensetzung nach Anspruch 8,
    dadurch gekennzeichnet,
    daß sie zwischen 2 und 5 Gew.%, vorzugsweise 3 Gew.% an wasserfreiem Sorbit enthält.

11. Kaugummizusammensetzung nach Anspruch 1, die eine relative Gleichgewichtsfeuchtigkeit von 44% aufweist,
    dadurch gekennzeichnet,
    daß sie in Gew.% 55% an Rohrzucker 13% an Glycosesirup, 22% an Grundgummimasse, 1% an Glycerin, 0,5% an Lecithin, 1% an flüssigen Geschmacksstoffen und 3% an Sorbit enthält.

12. Kaugummizusammensetzung nach Anspruch 11,

dadurch gekennzeichnet,
daß die Grundgummimasse, in Gew.% der Kaugummizusammensetzung, 0,016% eines Alterungsschutzmittels, 4,9% an Füllmasse, 2,8% an Wachsen, 3,4% an Plastifiziermitteln, 4,3% an Polymeren und 4,4% an Harzen enthält.

13. Verwendung von Karton oder Papierkartenverpackungen unter Ausschluß von jeglichem feuchtigkeitsbeständigem Material zur Verpackung einer Anzahl von Kaugummistreifen, deren Zusammensetzung gemäß einem der Ansprüche 1-12 ausgebildet ist und welche vorher in einer nichtundurchlässigen Aluminiumfolie eingewickelt sind.

**Revendications**

1. Composition de chewing-gum au sucre apte à être conditionnée sous forme de tablettes, sans précaution particulière, dans un emballage en carton ou en papier carton, à l'exclusion de tout matériau étanche à l'humidité, caractérisée en ce qu'elle présente une humidité relative comprise entre 43 et 45 % et en ce qu'elle comprend, en % en poids, entre environ 22 et environ 24 % de gomme de base, entre 11 et 14 % de sirop de glucose et entre 1,2 et 1,8 % en poids de substances plastifiantes : glycérine + lécithine.

2. Composition de chewing-gum selon la revendication 1, caractérisée en ce qu'elle contient environ 22 % en poids de gomme de base.

3. Composition de chewing-gum selon l'une des revendications 1 et 2, caractérisée en ce que la gomme de base ccomprend, en % en poids de la composition de chewing-gum, 0,018 à 0,019 % d'un anti-oxydant, 5,4 à 5,9 % de charges, 3,1 à 3,3 % de cires, 3,9 à 4,2 % de plastifiants, 4,8 à 5,2 % de polymères et 4,9 à 5,3 % de résines.

4. Composition de chewing-gum selon la revendication 3, caractérisée en ce que la gomme de base comprend, en % en poids de la composition de chewing-gum, 0,016 % d'un anti-oxydant, 4,9 % de charges, 2,8 % de cires, 3,5 % de plastifiants, 4,3 % de polymères et 4,4 % de résines.

5. Composition de chewing-gum selon l'une des revendications 1 à 4, caractérisée en ce qu'elle contient environ 13 % en poids de sirop de glucose.

6. Composition selon l'une des revendication 1 à 5, caractérisée en ce qu'elle comprend entre 55 et 60 % en poids et, de préférence, 58 % en poids de saccharose.

7. Composition de chewing-gum selon l'un des revendications 1 à 6, caractérisée en ce qu'elle comprend entre 0,8 et 1,2 % en poids de glycérine et entre 0,4 et 0,6 % en poids de lécithine.

8. Composition de chewing-gum selon l'une des revendications 1 à 7, caractérisée en ce qu'elle comprend entre 1,2 % et 1,8 % en poids de glycérine et entre 1,2 % et 1,8 % en poids de sorbitol liquide.

9. Composition de chewing-gum selon l'une des revendications 2 à 8, caractérisée en ce qu'elle comprend un stabilisant pulvérulent tel que le sorbitol anhydre.

10. Composition de chewing-gum selon la revendication 8, caractérisée en ce qu'elle contient entre 2 et 5 % en poids et, de préférence, 3 % en poids de sorbitol anhydre.

11. Composition selon la revendication 1, ayant une humidité relative d'équilibre de 44 %, caractérisée en ce qu'elle comprend, en % en poids, 55 % de saccharose, 13 % de sirop de glucose, 22 % de gomme de base, 1 % de glycérine, 0,5% de lécithine, 1 % d'aromatisant liquide et 3 % de sorbitol.

12. Composition selon la revendication 11, caractérisée en ce que la gomme de base comprend, en % en poids de la composition de chewing-gum, 0,016 % d'un anti-oxydant, 4,9 % de charges, 2,8 % de cires, 3,5 % de plastifiants, 4,3 % de polymères et 4,4 % de résines.

**13.** Utilisation d'emballages en carton ou en papier carton, à l'exclusion de tout matériau étanche à l'humidité, pour le conditionnement d'une lot de tablettes de chewing-gum dont la composition est conforme à l'une des revendications 1 à 12, préenveloppées d'une feuille d'aluminium non imperméable.